# FASCICULE DE BREVET EUROPEEN

(11) **EP 1 122 419 B1**
(45) Date de publication et mention de la délivrance du brevet: **10.08.2005**
(21) Numéro de dépôt: 01400212.5
(22) Date de dépôt: 26.01.2001
(51) Int. Cl.: F02F 1/38, F02F 1/24, F02M 39/00

(54) **Culasse pour moteur de véhicule automobile**
Zylinderkopf für eine Kraftfahrzeugmaschine
Cylinder head for an automobile engine

(30) Priorité: 31.01.2000 FR 0001175
(43) Date de publication de la demande: 08.08.2001
(73) Titulaire: Renault s.a.s., 92100 Boulogne Billancourt (FR)
(72) Inventeur: Rizzo, Stéphane, 78110 Le Vesinet (FR)

(56) Documents cités:
- FR-A- 2 306 341
- FR-A- 2 402 076
- US-A- 4 046 114

## Description

L'invention concerne une culasse pour un moteur de véhicule automobile.

L'invention concerne plus particulièrement une culasse pour un moteur de véhicule automobile du type qui comporte un corps réalisé par moulage.

Actuellement, les culasses pour les moteurs des véhicules automobiles, notamment les moteurs diesels à injection directe du type "common-rail" comportent un corps qui est réalisé par moulage en alliage d'aluminium.

Les injecteurs traversent le corps de haut en bas entre les faces supérieure et inférieure des parois latérales. Le corps comporte une chambre supérieure contenant de l'huile pour la lubrification d'organes du moteur tel qu'un arbre à cames et une chambre inférieure contenant de l'eau pour le refroidissement de la culasse et le refroidissement de la partie inférieure de l'injecteur. Les chambres inférieure et supérieure sont séparées par une cloison intermédiaire. Un couvercle de culasse est monté sur la face supérieure de façon à fermer la chambre supérieure. L'extrémité libre inférieure de l'injecteur débouche dans la chambre de combustion du cylindre correspondant.

Un injecteur de carburant alimente chaque chambre de combustion du moteur. Chaque injecteur de carburant est isolé de l'huile et de l'eau des chambres supérieure et inférieure par un puits tubulaire qui est réalisé lors du moulage en une seule pièce avec le corps.

Cette solution n'est pas optimale. En effet, les contraintes liées au procédé du moulage imposent notamment une épaisseur des parois du puits tubulaire de l'ordre de 5 mm. Or, une telle épaisseur nuit au bon refroidissement de la partie inférieure de l'injecteur, à la diminution du poids et augmente l'encombrement du corps de la culasse.

De plus, lors du moulage, les chambres inférieure et supérieure sont isolées l'une de l'autre. Le maintien en position du noyau de la chambre inférieure ainsi que l'évacuation des gaz de fonderie de ce noyau sont difficiles à réaliser.

Une autre conception connue consiste à réaliser un puits tubulaire qui traverse uniquement la chambre inférieure. Cependant, des problèmes se posent.

D'une part, il faut prévoir une étanchéité entre l'injecteur et le couvercle de culasse. En effet la partie supérieure de l'injecteur porte des éléments de connexion électrique et d'alimentation en carburant de l'injecteur qui doivent être situés à l'extérieur de la culasse.

D'autre part, lors de la maintenance du moteur, notamment du démontage des injecteurs, des précautions doivent être prises pour que l'huile située dans la chambre supérieure ne traverse pas les puits tubulaires vers les chambres de combustion.

Afin de résoudre ces problèmes, l'invention propose une culasse pour moteur de véhicule automobile du type qui comporte un corps réalisé par moulage comportant notamment un puits tubulaire qui s'étend au moins entre les faces supérieure et inférieure du corps de la culasse, qui est destiné à loger axialement un injecteur de carburant dans une chambre de combustion du moteur, et qui traverse successivement une chambre supérieure contenant de l'huile pour la lubrification d'organes du moteur tel qu'un arbre à cames et une chambre inférieure contenant de l'eau pour le refroidissement de la partie inférieure de l'injecteur, séparées par une cloison intermédiaire, caractérisée en ce que le puits tubulaire est un tube rapporté dans le corps moulé.

Selon d'autres caractéristiques de l'invention :
- des premiers moyens d'étanchéité, pour isoler de façon étanche la chambre supérieure de la chambre inférieure, sont interposés radialement entre la périphérie transversale intérieure de la cloison intermédiaire et la partie en vis-à-vis du tube rapporté ;
- les premiers moyens d'étanchéité comportent un joint torique ;
- le tube rapporté comporte à son extrémité inférieure libre des moyens pour sa fixation dans une cloison inférieure du corps de la culasse qu'il traverse et qui sépare la chambre inférieure de la chambre de combustion ;
- les moyens de fixation comportent un insert constitué d'un corps tubulaire qui est monté dans un trou axial débouchant réalisé dans la cloison inférieure ;
- le corps tubulaire de l'insert permet le positionnement axial et radial de la partie inférieure de l'injecteur de carburant ;
- l'extrémité libre inférieure du tube rapporté comporte une collerette radiale annulaire intérieure, l'insert comporte une collerette radiale extérieure et la collerette du tube est pincée par la collerette de l'insert contre un épaulement supérieur de la culasse ;
- le tube comporte à son extrémité libre inférieure des seconds moyens d'étanchéité pour isoler de façon étanche la chambre inférieure de la culasse et la chambre de combustion du moteur ;
- un produit ou une garniture est interposée axialement entre les faces annulaires de la collerette interne du tube et de l'épaulement supérieur de la culasse ;
- le tronçon d'extrémité libre supérieur comporte des moyens de maintien et d'étanchéité qui coopèrent avec un élément supérieur de la culasse ;
- le tube est flexible radialement de façon à compenser, par une légère déformation radiale, des dispersions d'alignement entre le trou axial débouchant, la périphérie transversale intérieure de la cloison intermédiaire et un orifice réalisé dans l'élément supérieur de la culasse qui reçoit l'extrémité libre supérieure du tube ;
- lors du moulage, les noyaux des chambres supérieure et inférieure sont en contact l'un avec l'autre de façon notamment à faciliter le dégazage du noyau inférieur et à améliorer la maîtrise de l'épaisseur de la paroi intermédiaire ;
- l'élément supérieur de la culasse est un couvercle de culasse.

D'autres caractéristiques et avantages de l'invention apparaîtront la lecture de la description détaillée qui suit pour la compréhension de laquelle on se reportera aux dessins annexés parmi lesquels :
- la figure 1 est une vue partielle en coupe axiale du corps moulé d'une culasse avant usinage, selon l'état de la technique ;
- la figure 2 est une vue partielle en coupe axiale d'une culasse selon l'état de la technique ;
- la figure 3 est une vue en coupe axiale du corps moulé d'une culasse avant l'usinage réalisé conformément aux enseignements de l'invention ;
- la figure 4 est une vue en coupe axiale d'une culasse comportant un puits tubulaire rapporté, conformément aux enseignements de l'invention ;
- la figure 5 est une vue en coupe transversale de la culasse selon la ligne 5-5 représentée à la figure 4.
- la figure 6 représente en coupe et en détail la partie inférieure du puits tubulaire rapporté ;
- la figure 7 est une vue à grande échelle du détail D7 de la figure 6.

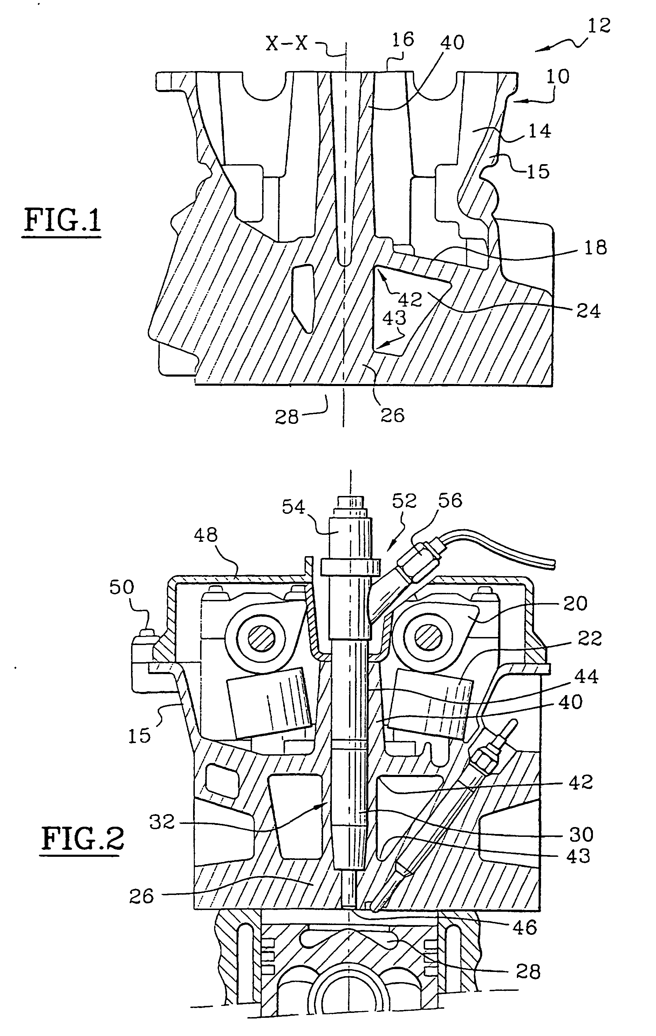

Dans la description qui suit on utilisera une orientation verticale selon la direction de l'axe X-X représenté sur les figures 1 à 4.

La figure 1 représente le corps 10 d'une culasse 12 d'un moteur. Le corps 10 peut être réalisé par moulage en aluminium de fonderie.

Le corps 10 comporte une chambre supérieure 14 dite chambre "huile" qui est délimitée latéralement par des parois latérales 15 et verticalement par une face supérieure 16 et une cloison intermédiaire 18. La chambre supérieure 14 est remplie d'huile qui permet la lubrification des contacts entre des éléments mobiles tels que des cames 20 et des poussoirs 22 représentés à la figure 2.

Le corps 10 comporte aussi une chambre inférieure 24 dite chambre "eau". Elle est comprise entre le prolongement des parois latérales 15, la paroi intermédiaire 18 et une paroi inférieure 26 qui sépare la chambre inférieure 24 d'une chambre de combustion 28 du moteur. La chambre inférieure 24 permet la circulation d'un fluide tel que de l'eau pour refroidir notamment la partie inférieure 30 d'un injecteur de carburant 32.

Dans sa partie centrale, le corps 10 comporte en vis-à-vis de chaque chambre de combustion 28 du moteur un puits tubulaire 40 qui est destiné à recevoir l'injecteur de carburant 32. Le puits tubulaire 40 est aussi appelé puits d'injecteur et il traverse de part en part le corps 10 selon un axe X-X d'orientation sensiblement verticale.

La figure 1 qui représente le corps 10 après l'opération de moulage, permet d'illustrer la répartition de la matière, notamment l'épaisseur de la paroi du puits tubulaire 40 ainsi que le congé de raccordement 42 du puits tubulaire 40 avec la paroi intermédiaire 18, et le congé 43 du puits tubulaire 40 avec la paroi inférieure 26.

La figure 2 représente la culasse 12 constituée du corps 10 après usinage de certaines zones fonctionnelles, notamment le perçage intérieur 44 qui traverse le puits tubulaire 40 de part en part selon l'axe X-X, et qui est destiné à recevoir l'injecteur de carburant 32.

L'extrémité inférieure 46 de l'injecteur de carburant 32 débouche, de la cloison inférieure 26, dans la chambre de combustion 28 du moteur.

Un couvercle de culasse 48 est fixé de façon étanche par des éléments de fixation tels que des vis 50 sur la face supérieure 16 du corps 10 de la culasse 12.

La partie supérieure 52 de l'injecteur 32 comporte les connexions électriques 54 qui permettent le pilotage de l'injection de carburant dans la chambre de combustion 28, ainsi que l'alimentation 56 en carburant sous haute pression. Le couvercle de culasse 48 est traversé par l'injecteur de carburant 32 de façon que la partie supérieure 52 soit située à l'extérieur de la culasse 12 pour son raccordement à des moyens d'alimentation en carburant.

Cette réalisation présente les inconvénients décrit précédemment.

La présente invention, propose une culasse 12 qui remédie à ces inconvénients.

Dans la suite de la description les éléments identiques ou similaires à ceux de l'état de la technique seront repérés par des chiffres de référence identiques.

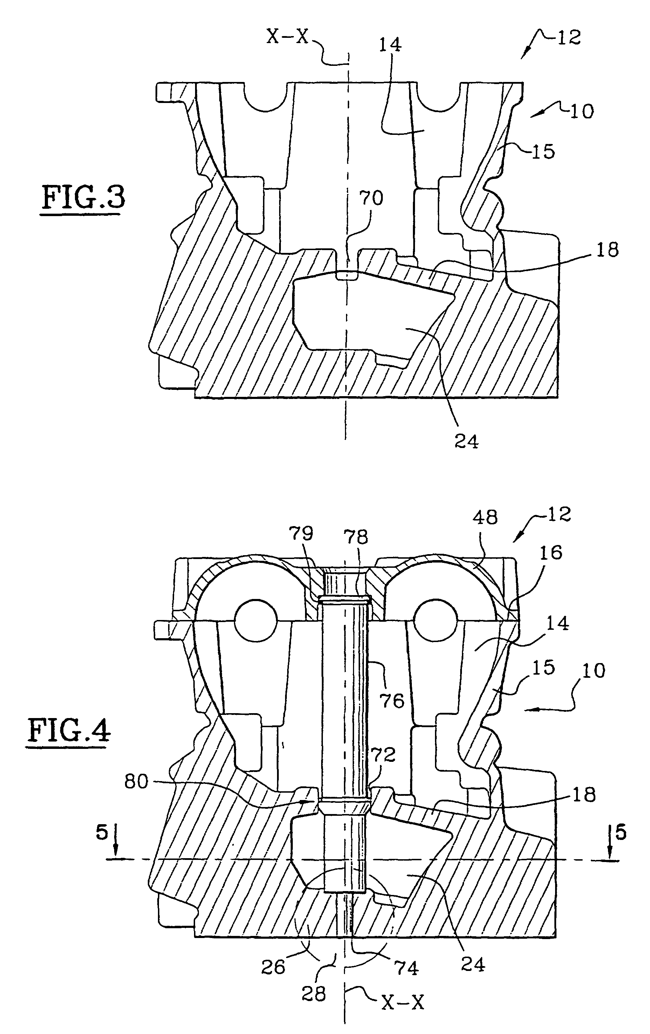

La figure 3 représente le corps 10 de la culasse 12 après le moulage réalisé conformément aux enseignements de l'invention.

Le corps 10 ne comporte plus de puits tubulaire moulé et la cloison intermédiaire 18 comporte un évidement 70 qui permet le passage de l'injecteur à travers les chambres supérieure 14 et inférieure 24. Ainsi, lors du moulage, les noyaux (non représentés) qui permettent la réalisation des chambres supérieure 14 et inférieure 24 peuvent être en contact l'un avec l'autre. Cela présente deux avantages.

Le premier avantage concerne le dégazage du noyau de la chambre inférieure 24. Lors de la coulée du métal fondu dans le moule, les noyaux, généralement réalisés en sable, produisent des gaz qui ont tendance à remonter. Lorsque le corps 10 est réalisé conformément à l'état de la technique des bulles de gaz se trouvent prisonnières à l'interface entre le noyau de la chambre inférieure 24 et la face inférieure de la paroi intermédiaire 18. Elles ont tendance à pénétrer à l'intérieur de la paroi intermédiaire 18. Cela crée des défauts de structure de la matière du corps 10 qui diminuent la résistance du corps 10.

Le second avantage concerne le positionnement des noyaux des chambres supérieure 14 et inférieure 24. En effet, l'évidement 70 permet la réalisation d'un bossage dans l'un des noyaux qui pénètre dans une forme complémentaire réalisée dans l'autre noyau.

La coopération de ces deux formes permet de limiter la remontée du noyau de la chambre inférieure 24. En effet, la coulée du métal provoque d'une part un phénomène de "flottaison" du noyau en sable, du fait que sa densité est inférieure à celle du métal coulé tel que l'aluminium et d'autre part le fluage du noyau du fait de la température élevée du métal en fusion. Ces deux phénomènes peuvent entraîner des déports du noyau de la chambre inférieure 24 qui peuvent atteindre 3 à 4 mm, par exemple selon l'axe vertical.

La réalisation du bossage et de la forme complémentaire dans l'un et l'autre des noyaux permet une bonne maîtrise de l'épaisseur de la paroi intermédiaire 18, les phénomènes décrits précédemment étant alors fortement limités.

Par la suite, conformément à la figure 4, le corps 10 de la culasse 12 est usiné, notamment par perçage verticale, de façon à réaliser un évidement cylindrique 72 dans la cloison intermédiaire 18 et un trou axial débouchant 74 dans la cloison inférieure 26. L'évidement 72 et le trou axial débouchant 74 sont sensiblement alignés verticalement selon l'axe X-X.

Selon l'invention, le puits tubulaire 40 est remplacé par un tube 76 rapporté dans le corps 10 moulé de la culasse 12.

Avantageusement, le tube 76 est réalisé par hydroformage d'un tube d'acier inoxydable dont l'épaisseur est de l'ordre de 0,5 mm.

La diminution de l'épaisseur du tube 76 par rapport au puits tubulaire moulé 40 permet de diminuer l'encombrement de cette partie de la culasse 12 de plusieurs millimètres. Cela à plusieurs conséquences.

D'une part, il est possible de diminuer l'angle de l'axe des soupapes (non représentées) par rapport à l'axe vertical X-X, ce qui améliore la combustion du mélange air-carburant dans la chambre de combustion 28. En effet, plus l'axe de la soupape est incliné par rapport à l'axe vertical X-X, plus il y a formation de zones dites "mortes" dans la chambre 28, créant ainsi des zones dans lesquelles la combustion n'est pas optimum. L'amélioration de la combustion provoque notamment une diminution des émissions polluantes, de la consommation du moteur, de l'encombrement de la culasse 12 ainsi qu'une augmentation des performances du moteur.

D'autre part, l'épaisseur du puits tubulaire étant diminuée, les échanges thermiques entre l'eau qui circule dans la chambre inférieure 24 et la partie inférieure 30 de l'injecteur de carburant sont augmentés. Le fonctionnement et la fiabilité de l'injecteur 32 sont alors améliorés.

Ces modifications sont très importantes notamment dans le cas d'architectures contraignantes telles que celles des moteurs présentant une petite cylindrée ou comportant plusieurs soupapes d'admission avec des contraintes thermomécaniques élevées.

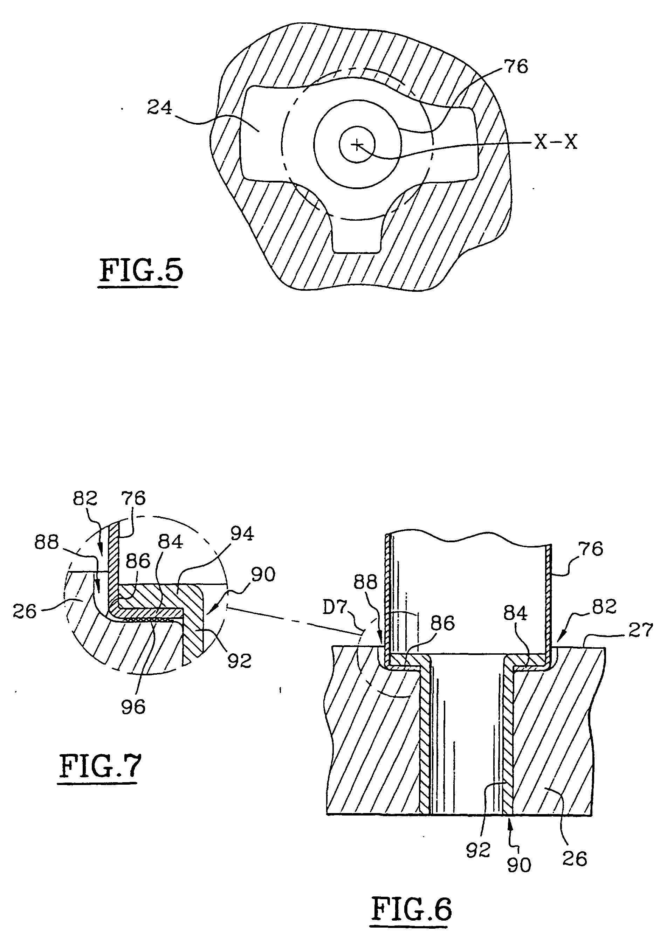

La figure 5 illustre en coupe transversale, la circulation de l'eau de la chambre inférieure 24 autour du tube 76, représenté en traits forts, et du puits tubulaire 40, représenté en traits mixtes.

Le tube 76 comporte à son extrémité supérieure une collerette 78, représentée à la figure 5, de section axiale conique qui permet de faciliter l'engagement de l'extrémité supérieure dans un orifice réalisé dans le couvercle de culasse 48, lors de l'assemblage du couvercle 48, sur la face supérieure 16 du corps 10. Une gorge est réalisée sous la collerette 78. Elle permet de recevoir un élément d'étanchéité tel qu'un joint torique 79 qui coopère avec le couvercle de culasse 48 et qui permet d'isoler de façon étanche la chambre supérieure 14 contenant de l'huile et l'extérieur de la culasse 12. Lors de l'assemblage du couvercle de culasse 48 sur le corps 10, l'extrémité supérieure du tube 76 est maintenue dans l'orifice du couvercle 48.

L'élément d'étanchéité 79 permet aussi d'isoler mécaniquement le tube 76 des vibrations transmises par le couvercle de culasse 48.

Le tronçon intermédiaire du tube 76 traverse l'évidement cylindrique 72. Il comporte sur sa périphérie radiale des moyens d'étanchéité tels qu'un joint torique 80 qui est situé dans une gorge et qui coopère avec la périphérie transversale intérieure de l'évidement 72 de la cloison intermédiaire 18. Les moyens d'étanchéité 80 permettent d'isoler la chambre supérieure 14 de la chambre inférieure 24.

Cette configuration permet de supprimer les congés de raccordement 42 et 43 existant selon l'état de la technique entre le puits tubulaire 40 et la paroi intermédiaire 18, et la paroi inférieure 26 respectivement, ce qui améliore les échanges thermiques entre l'eau qui circule dans la chambre inférieure 24 et la partie inférieure 30 de l'injecteur de carburant.

Conformément à la figure 6, le tronçon d'extrémité inférieure 82 du tube 76 comporte une collerette radiale annulaire intérieure 84 qui vient en contact avec le fond 86 d'un épaulement supérieur 88 réalisé dans la face supérieure 27 de la cloison inférieure 26.

L'extrémité inférieure 82 est fixée dans la cloison inférieure 26 par des moyens de fixation qui sont ici constitués par un insert 90 qui traverse la paroi inférieure 26 du corps 10.

L'insert 90 comporte un corps tubulaire 92 à l'extrémité supérieure duquel est réalisée une collerette radiale annulaire 94 qui s'étend vers l'extérieur. De préférence, l'insert 90 est réalisé en aluminium.

Lors de l'assemblage de la culasse 12, la collerette 84 du tube rapporté 76 est mise en appui contre le fond 86 de l'épaulement 88. L'insert 90 est alors introduit, axialement de haut en bas, dans le tube 76, puis est fixé dans le trou axial débouchant 74. La fixation peut-être réalisée par exemple, par emmanchement avec un ajustement serré, par dudgeonnage ou par sertissage de son extrémité inférieure située du côté de la chambre de combustion 28.

Ainsi, la collerette 94 de l'insert 90 pince axialement la collerette radiale 84 du tube 76 contre le fond 86 de l'épaulement 88 de façon à assurer la fixation axiale du tube 76 ainsi que l'étanchéité entre la chambre de combustion 28 et la chambre inférieure 24.

Avantageusement, afin d'améliorer l'étanchéité entre la chambre de combustion 28 et la chambre inférieure 24 des moyens d'étanchéité 96 tels qu'un produit ou une garniture sont interposés axialement entre les faces annulaires en vis-à-vis de la collerette radiale 84 du tube et le fond 86 de l'épaulement 88.

Selon une variante, le tube 76 et l'insert 90 sont réalisés en une seule pièce en aluminium.

En plus des avantages décrits précédemment, la culasse 12 réalisée, conformément aux enseignements de l'invention, avec un tube 76 formant puits d'injecteur en matériau, tel qu'un alliage d'aluminium ou d'acier inoxydable, est légèrement flexible radialement de façon à compenser par une légère déformation radiale, des dispersions d'alignement entre le trou axial 74, l'évidement 72 et l'orifice réalisé dans le couvercle de culasse 48. Cela permet notamment de limiter les risques de rupture du tube 76, et de mauvaise étanchéité entre son extrémité supérieure et le couvercle de culasse 48.

## Revendications

1. Culasse (12) pour moteur de véhicule automobile du type qui comporte un corps (10) réalisé par moulage comportant notamment un puits tubulaire (40) qui s'étend au moins entre les faces supérieure (16) et inférieure du corps (10) de la culasse (12), qui est destiné à loger axialement un injecteur (32) de carburant dans une chambre de combustion (28) du moteur, et qui traverse successivement une chambre supérieure (14) contenant de l'huile pour la lubrification d'organes du moteur tel qu'un arbre à cames (20) et une chambre inférieure (24) contenant de l'eau pour le refroidissement de la partie inférieure (30) de l'injecteur (32), séparées par une cloison intermédiaire (18), **caractérisée en ce que** le puits tubulaire (40) est un tube rapporté (76) dans le corps (10) moulé.

2. Culasse selon la revendication précédente, **caractérisée en ce que** des premiers moyens d'étanchéité (80), pour isoler de façon étanche la chambre supérieure (14) de la chambre inférieure (24), sont interposés radialement entre la périphérie transversale intérieure (72) de la cloison intermédiaire (18) et la partie en vis-à-vis du tube rapporté (76).

3. Culasse selon la revendication précédente, **caractérisée en ce que** les premiers moyens d'étanchéité (80) comportent un joint torique.

4. Culasse selon l'une quelconque des revendications précédentes, **caractérisée en ce que** le tube rapporté (76) comporte à son extrémité inférieure libre (82) des moyens pour sa fixation dans une cloison inférieure (26) du corps (10) de la culasse (12) qu'il traverse et qui sépare la chambre inférieure (24) de la chambre de combustion (28).

5. Culasse selon la revendication précédente, **caractérisée en ce que** les moyens de fixation comportent un insert (90) constitué d'un corps tubulaire (92) qui est monté dans un trou axial débouchant (74) réalisé dans la cloison inférieure (26).

6. Culasse selon la revendication précédente, **caractérisée en ce que** le corps tubulaire (92) de l'insert (90) permet le positionnement axial et radial de la partie inférieure (30) de l'injecteur de carburant.

7. Culasse selon la revendication précédente, **caractérisée en ce que** l'extrémité libre inférieure (82) du tube rapporté (76) comporte une collerette radiale annulaire intérieure (84), **en ce que** l'insert (90) comporte une collerette radiale extérieure (94) et **en ce que** la collerette (84) du tube (76) est pincée par la collerette (94) de l'insert (90) contre un épaulement supérieur (88) de la culasse (12).

8. Culasse selon l'une quelconque des revendications précédentes, **caractérisée en ce que** le tube (76) comporte à son extrémité libre inférieure (82) des seconds moyens d'étanchéité pour isoler de façon étanche la chambre inférieure (24) de la culasse (12) et la chambre de combustion (28) du moteur.

9. Culasse selon la revendication précédente prise en combinaison avec la revendication 7, **caractérisée en ce qu'**un produit ou une garniture (86) est interposé axialement entre les faces annulaires de la collerette interne (84) du tube (76) et de l'épaulement supérieur (88) de la culasse (12).

10. Culasse selon l'une quelconque des revendications précédentes, **caractérisée en ce que** le tronçon d'extrémité libre supérieur du tube rapporté (76) comporte des moyens de maintien et d'étanchéité qui coopèrent avec un élément supérieur de la culasse (12).

11. Culasse selon la revendication précédente, **caractérisée en ce que** le tube (76) est flexible radialement de façon à compenser, par une légère déformation radiale, des dispersions d'alignement entre le trou axial débouchant (74), la périphérie transversale intérieure (72) de la cloison intermédiaire (18) et un orifice réalisé dans l'élément supérieur de la culasse (12) qui reçoit l'extrémité libre supérieure du tube (76).

12. Culasse selon la revendication précédente, **caractérisée en ce que**, lors du moulage, les noyaux des chambres supérieure (14) et inférieure (24) sont en contact l'un avec l'autre de façon notamment à faciliter le dégazage du noyau inférieur et à améliorer la maîtrise de l'épaisseur de la paroi intermédiaire (18).

13. Culasse selon l'une des revendications 11 ou 12, **caractérisée en ce que** l'élément supérieur de la culasse (12) est un couvercle de culasse (48).

## Patentansprüche

1. Zylinderkopf (12) für einen Motor eines Kraftfahrzeugs von der Art, welcher einen Körper (10) aufweist, der durch Gießen realisiert ist, aufweisend insbesondere einen röhrenförmigen Schacht (40), der sich mindestens zwischen der oberen Fläche (16) und unteren Fläche des Körpers (10) des Zylinderkopfes (12) erstreckt, der dafür bestimmt ist, eine Einspritzdüse (32) von Kraftstoff in eine Brennkammer (28) des Motors axial aufzunchmen, und welcher nacheinander durchquert eine obere Kammer (14), die das Öl für die Schmierung von Motorbauteilen, wie z.B. eine Nockenwelle (20), enthält, und eine untere Kammer (24), welche Wasser für die Kühlung des unteren Teils (30) der Einspritzdüse (32) enthält, die durch eine Zwischen-Trennwand (18) getrennt sind, **dadurch gekennzeichnet, dass** der röhrenförmige Schacht (40) ein Rohr (76) ist, welches in den gegossenen Körper (10) eingesetzt ist

2. Zylinderkopf nach dem vorangegangenen Anspruch, **dadurch gekennzeichnet, dass** erste Dichtungsmittel (80) zum Isolieren auf dichte Weise der oberen Kammer (14) von der unteren Kammer (24) radial zwischen der transversalen, inneren Peripherie (72) der Zwischen-Trennwand (18) und dem Teil gegenüberliegend des eingesetzten Rohres (76) zwischengesetzt sind.

3. Zylinderkopf nach dem vorangegangenen Anspruch, **dadurch gekennzeichnet, dass** die ersten Dichtungsmittel (80) einen O-Ring aufweisen.

4. Zylinderkopf nach irgendeinem der vorangegangenen Ansprüche, **dadurch gekennzeichnet, dass** das eingesetzte Rohr (76) an seinem freien unteren Ende (82) Mittel für seine Befestigung in einer unteren Trennwand (26) des Körpers (10) des Zylinderkopfes (12) aufweist, die es durchquert und welche die untere Kammer (24) von der Brennkammer (28) trennt.

5. Zylinderkopf nach dem vorangegangenen Anspruch, **dadurch gekennzeichnet, dass** die Befestigungsmittel einen Einsatz (90) aufweisen, der aus einem röhrenförmigen Körper (92) gebildet ist, der in einem axialen, mündenden Loch (74) montiert ist, das in der unteren Trennwand (26) realisiert ist.

6. Zylinderkopf nach dem vorangegangenen Anspruch, **dadurch gekennzeichnet, dass** der röhrenförmige Körper (92) des Einsatzes (90) die axiale und radiale Positionierung des unteren Teils (30) der KraftstoffEinspritzdüse ermöglicht.

7. Zylinderkopf nach dem vorangegangenen Anspruch, **dadurch gekennzeichnet, dass** das freie untere Ende (82) des eingesetzten Rohres (76) einen radialen, ringförmigen, inneren Kragen (84) aufweist, dass der Einsatz (90) einen radialen, äußeren Kragen (94) aufweist und dass der Kragen (84) des Rohres (76) durch den Kragen (94) des Einsatzes (90) gegen eine obere Schulter (88) des Zylinderkopfes (12) geklemmt ist.

8. Zylinderkopf nach irgendeinem der vorangegangenen Ansprüche, **dadurch gekennzeichnet, dass** das Rohr (76) an seinem freien, unteren Ende (82) zweite Dichtungsmittel aufweist, zum Isolieren auf dichte Weise der unteren Kammer (24) des Zylinderkopfes (12) und der Brennkammer (28) des Motors.

9. Zylinderkopf nach dem vorangegangenen Anspruch in Kombination mit dem Anspruch 7, **dadurch gekennzeichnet, dass** ein Produkt oder ein Einsatz (86) axial zwischen den ringförmigen Flächen des inneren Kragens (84) des Rohres (76) und der oberen Schulter (88) des Zylinderkopfes (12) zwischengesetzt ist.

10. Zylinderkopf nach irgendeinem der vorangegangenen Ansprüche, **dadurch gekennzeichnet, dass** das Teilstück des oberen freien Endes des eingesetzten Rohres (76) Halte- und Dichtungsmittel ausweist, welche mit einem oberen Element des Zylinderkopfes (12) zusammenwirken.

11. Zylinderkopf nach dem vorangegangenen Anspruch, **dadurch gekennzeichnet, dass** das Rohr (76) radial in solch einer Art und Weise flexibel ist, um durch eine leichte, radiale Verformung Ausrichtungsstreuungen zwischen dem axialen, mündenden Loch (74), der transversalen, inneren Peripherie (72) der Zwischen-Trennwand (18) und einer Öffnung zu kompensieren, die in dem oberen Element des Zylinderkopfes (12) realisiert ist, welche das obere freie Ende des Rohres (76) aufnimmt.

12. Zylinderkopf nach dem vorangegangenen Anspruch, **dadurch gekennzeichnet, dass** während dem Gießen die Kerne der oberen (14) und unteren (24) Kammern miteinander derart in Kontakt sind, um insbesondere die Entgasung des unteren Kerns zu erleichtern und die Bewerkstelligung der Dicke der Zwischenwand (18) zu verbessern.

13. Zylinderkopf nach einem der Ansprüche 11 oder 12, **dadurch gekennzeichnet, dass** das obere Element des Zylinderkopfes (12) ein Zylinderkopfdeckel (48) ist.

## Claims

1. Cylinder head (12) for a motor vehicle engine of the type which comprises a body (10) made by casting comprising in particular a tubular well (40) which extends at least between the upper (16) and lower faces of the body (10) of the cylinder head (12), which is intended to axially accommodate a fuel injector (32) in a combustion chamber (28) of the engine, and which successively passes through an upper chamber (14) containing oil for lubricating engine components such as a camshaft (20) and a lower chamber (24) containing water for cooling the lower part (30) of the injector (32), separated by an intermediate partition (18), **characterized in that** the tubular well (40) is a tube inserted (76) into the cast body.

2. Cylinder head according to the preceding claim, **characterized in that** first sealing means (80), to isolate the upper chamber (14) from the lower chamber (24) in a sealed manner, are radially interposed between the internal transverse periphery (72) of the intermediate partition (18) and the part facing the inserted tube (76).

3. Cylinder head according to the preceding claim, **characterized in that** the first sealing means (80) comprise an O-ring.

4. Cylinder head according to any one of the preceding claims, **characterized in that** the inserted tube (76) comprises at its free lower end (82) means for fixing it in a lower partition (26) of the body (10) of the cylinder head (12) through which it passes and which separates the lower chamber (24) from the combustion chamber (28).

5. Cylinder head according to the preceding claim, **characterized in that** the fixing means comprise an insert (90) constituted by a tubular body (92) which is mounted in an axial through-hole (74) made in the lower partition (26).

6. Cylinder head according to the preceding claim, **characterized in that** the tubular body (92) of the insert (90) allows the axial and radial positioning of the lower part (30) of the fuel injector.

7. Cylinder head according to the preceding claim, **characterized in that** the lower free end (82) of the inserted tube (76) comprises an internal annular radial flange (84), **in that** the insert (90) comprises an external radial flange (94) and **in that** the flange (84) of the tube (76) is pinched by the flange (94) of the insert (90) against an upper shoulder (88) of the cylinder head (12).

8. Cylinder head according to any one of the preceding claims, **characterized in that** the tube (76) comprises at its lower free end (82) second sealing means to isolate the lower chamber (24) of the cylinder head (12) and the combustion chamber (28) from the engine in a sealed manner.

9. Cylinder head according to the preceding claim taken in combination with claim 7, **characterized in that** a compound or a packing (86) is axially interposed between the annular faces of the internal flange (84) of the tube (76) and the upper shoulder (88) of the cylinder head (12).

10. Cylinder head according to any one of the preceding claims, **characterized in that** the upper free end-section of the inserted tube (76) comprises holding and sealing means which cooperate with an upper element of the cylinder head (12).

11. Cylinder head according to the preceding claim **characterized in that** the tube (76) is radially flexible so as to compensate, by a slight radial deformation, for differences in alignment between the axial through-hole (74), the internal transverse periphery (72) of the intermediate partition (18) and an orifice made in the upper element of the cylinder head (12) which receives the upper free end of the tube (76).

12. Cylinder head according to the preceding claim **characterized in that**, during casting, the cores of the upper (14) and lower (24) chambers are in contact with one another so as in particular to facilitate the degassing of the lower core and to improve the control of the thickness of the intermediate wall (18).

13. Cylinder head according to one of claims 11 or 12, **characterized in that** the upper element of the cylinder head (12) is a cylinder head cover (48).
